# EUROPEAN PATENT SPECIFICATION

(11) **EP 2 717 140 B1**
(45) Date of publication and mention of the grant of the patent: **09.01.2019**
(21) Application number: 11866131.3
(22) Date of filing: 24.05.2011
(51) Int. Cl.: G06F 3/0488, G06F 3/048, G06F 3/041, G05B 19/042, H04L 12/28, G06F 3/0481

(54) **EQUIPMENT CONTROL DEVICE, OPERATION RECEPTION METHOD, AND PROGRAM**
GERÄTESTEUERUNGSVORRICHTUNG, OPERATIONSEMPFANGSVERFAHREN UND PROGRAMM
DISPOSITIF DE COMMANDE D'ÉQUIPEMENT, PROCÉDÉ DE RÉCEPTION DE COMMANDE ET PROGRAMME

(43) Date of publication of application: 09.04.2014
(73) Proprietor: Mitsubishi Electric Corporation, Tokyo 100-8310 (JP)
(72) Inventor: ISHIZAKA, Taichi, Tokyo 100-8310 (JP)
(74) Representative: Pfenning, Meinig & Partner mbB
(86) International application number: PCT/JP2011/061890
(87) International publication number: WO 2012/160653

(56) References cited:
- EP-A2- 1 881 649
- EP-A2- 2 323 023
- JP-A- 11 110 455
- JP-A- 2011 013 778
- JP-A- 2011 081 480
- US-A- 5 825 352
- US-A1- 2007 132 721
- US-A1- 2010 095 206
- US-A1- 2010 328 438
- US-A1- 2011 083 106

## Description

### Technical Field

The present invention relates to an equipment control device, operation reception method, and program, for example, for controlling multiple equipped apparatuses installed in a building or the like.

### Background Art

US 2010/0328438 A1 discloses: A stereoscopic image displaying device includes an outer surface that a detection target object approaches; a stereoscopic image generating unit that generates a three-dimensional stereoscopic image based on an input video signal, and a proximity sensor unit htat is discposed on a side of the outer surface that is opposite to a side that the detection target object approaches and detects proximity of the detection target object to the outer surface based on a height that is a distance from the outer surface and is set based on parallax information included in the video signal.

US 2007/0132721 A1 discloses: A three-dimensional virtual-touch human-machine interface system and a method of operating the system are presented. The system incorporates a three-dimensional time-of-flight sensor, a three-dimensional autostereoscopic display, and a computer coupled to the sensor and the display. The sensor detects a user object within a three-dimensional sensor space. The display displays an image within a three-dimensional display space.

EP 1 881 649 A2 discloses: A display and operation device in the field of building system technique. The device is connected with actors via a bus system.

EP 2 323 023 A2 discloses: An apparatus detecting a proximity tough efficiently identifies a gesture which a user uses in the user's daily life and performs an operation corresponding to the gesture. The apparatus detects a proximity touch of an object and generates a detection signal. The apparatus generates detection information including three-dimensional positional information about the object using the detection signal and generates tracking information by tracking the detection information. The apparatus identifies a gesture corresponding to the tracking information by retrieving the gesture from a storage unit and executes an operation corresponding to the gesture.

US 2010/0095206 A1 discloses the following: Provided is a method capable of making various modifications to widgets, graphic objects, or image, which are displayed on a display device, according to motions of a plurality of input units such as finger or stylus pen, with the use of a three-dimensional multi-sensor configured to detect the motions of the input units in a space, without touching the display device.

US 5,825,352 discloses: Method and apparatus for detecting an operative coupling between one or more fingers or other appropriate objects and a touch pad includes processes for detection of multiple maxima with intermediate minima in appropriate sequences to emulate the operations of cursor control and button actuations in a pointing and control device. US 2011/0083106 A1 discloses an image input system comprising a display device that displays a three-dimensional image.

Techniques of creating and displaying multiple images on a liquid crystal device and utilizing the parallax to visualize a stereoscopic image are known in movie and television image display.

Three-dimensional (3D) movies shown in movie theaters generally utilize the polarization filter method. In the polarization filter method, the right and left images are linearly polarized and projected in a superimposed manner. Wearing a pair of polarization glasses provided with polarization filters separating the right and left images, the theater attendances can view stereoscopic video images.

On the other hand, home 3D liquid crystal television sets generally utilize the liquid crystal shutter method. In the liquid crystal shutter method, the right and left images are switched in a given cycle to display. Wearing a pair of liquid crystal shutter glasses of which the right and left opening/closing separately in time with the liquid crystal display cycle, the viewer can view stereoscopic video images.

Additionally, the parallax barrier method and lenticular lens method make stereoscopic video images visible with the naked eye by displaying right and left images while placing a shielding plate in front of the pixels.

For example, Patent Literature 1 discloses a technique of creating a three-dimensional display direction image using the above stereoscopic visualization techniques and switching the control range on the inputter to the position corresponding to the stereoscopically visible position so that the user can touch the inputter so as to touch the stereoscopically visible button to enter an intended direction into the device.

### Citation List

### Patent Literature

Patent Literature 1: Unexamined Japanese Patent Application Kokai Publication No. 2010-55266.

### Summary of Invention

### Technical Problem

The technique of the Patent Literature 1 may correct the horizontal error between the stereoscopically visible direction area and the direction area actually displayed on the screen using a stereoscopic visualization-capable display device and a direction position-detectable input device. However, the input device itself utilizes a conventional touch panel. Therefore, upon actual operation, the button does not react unless the user touches, through a stereoscopically visible image, the screen of the input device behind the image. For that reason, it is undeniable that the user has a feeling of strangeness upon operation.

The present invention is invented in view of the above situation and an exemplary objective of the present invention is to provide an equipment control device, operation reception method, and program making it possible to operate stereoscopically displayed operation items at the positions where the operation items are stereoscopically visible by setting their operable ranges in consideration of the height position.

### Solution to Problem

In order to achieve the above objective, the equipment control device according to the present invention is an equipment control device according to claim 1.

### Advantageous Effects of Invention

The present invention allows the user to operate stereoscopically displayed operation items at the positions where the operation items are stereoscopically visible by setting their operable ranges in consideration of the height position, and thus to conduct intuitive operation, which is more convenient for user operation.

### Brief Description of Drawings

FIG. 1 is an illustration showing an entire configuration of an equipment system comprising an equipment control device according to Embodiment 1 of the present invention;
FIG. 2 is a block diagram showing a configuration of the equipment control device shown in FIG. 1;
FIG. 3 is an illustration showing a structure of a constituent item management table shown in FIG. 2;
FIG. 4 is a flowchart showing a procedure of screen display processing executed by the equipment control device shown in FIG. 1;
FIG. 5 is an illustration showing an exemplary screen displayed on a display device as a result of the screen display processing shown in FIG. 4;
FIG. 6 is a flowchart showing a procedure of operation reception processing executed by the equipment control device shown in FIG. 1;
FIG. 7 is an illustration showing exemplary operable ranges of some operation items in Embodiment 1;
FIG. 8 is a block diagram showing a configuration of an equipment control device according to Embodiment 2 of the present invention;
FIG. 9 is an illustration for explaining touch operation;
FIG. 10 is an illustration for explaining pinching operation;
FIG. 11 is a flowchart showing a procedure of operation reception processing executed by the equipment control device shown in FIG. 8;
FIG. 12 is an illustration showing multiple operation items displayed in a superimposed manner in Embodiment 2 by way of example;
FIG. 13 is a block diagram showing a configuration of an equipment control device according to Embodiment 3 of the present invention;
FIG. 14 is an illustration showing a structure of a plan view management table shown in FIG. 13;
FIG. 15 is a flowchart showing a procedure of floor selection processing executed by the equipment control device shown in FIG. 13; and
FIG. 16 is an illustration for explaining a variation of Embodiment 3.

### Description of Embodiments

The equipment control device according to embodiments of the present invention will be described hereafter with reference to the drawings.

### Embodiment 1

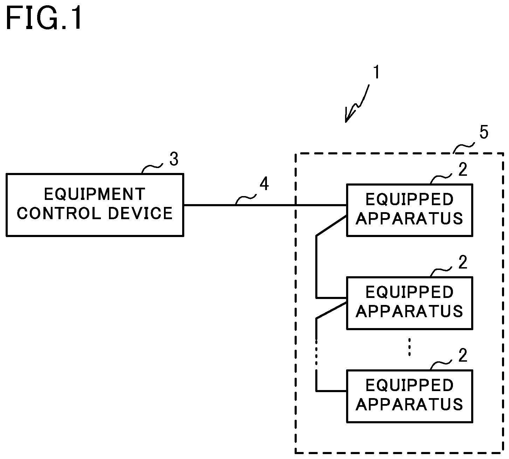

FIG. 1 shows a configuration of an equipment system 1 according to Embodiment 1 of the present invention. The equipment system 1 is a system for controlling and managing, for example, air-conditioning apparatuses and lighting apparatuses installed in an office building. As shown in FIG. 1, the equipment system 1 comprises multiple equipped apparatuses 2 such as air-conditioning apparatuses and lighting apparatuses and an equipment control device 3. The equipped apparatuses 2 and equipment control device 3 are communicably connected to each other via a dedicated communication line 4.

The equipped apparatuses 2 are each installed at different locations in a given living space. The equipped apparatuses 2 are monitored and controlled under the control of the equipment control device 3. If the equipped apparatuses 2 are air-conditioning apparatuses, they condition the air in the living space, and if they are lighting apparatuses, they light up/darken the living space. These multiple equipped apparatuses 2 are also referred to as a group of equipped apparatuses 5 in the following explanation.

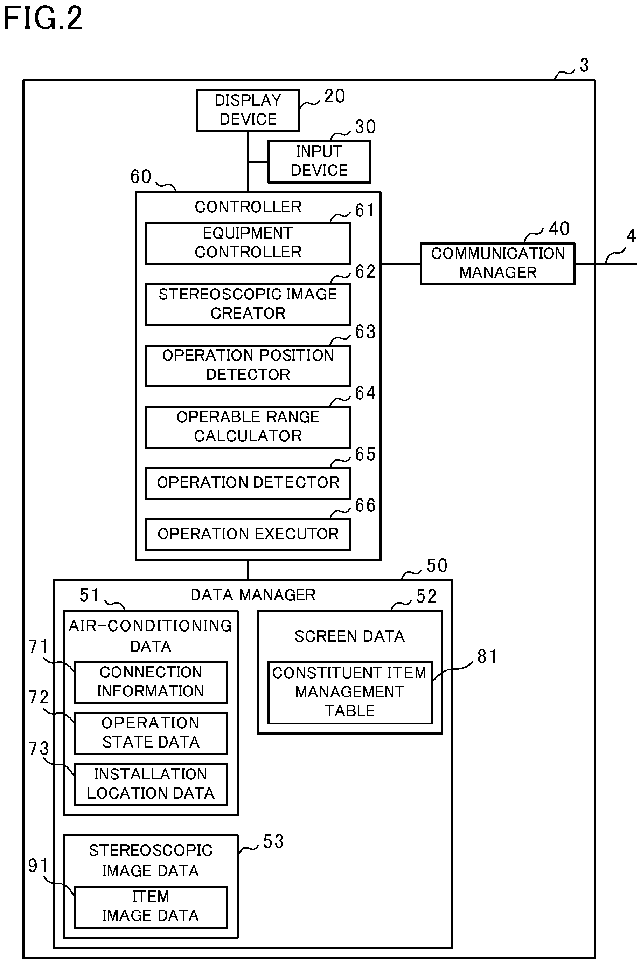

The equipment control device 3 collectively controls and manages the group of equipped apparatuses 5 including multiple equipped apparatuses 2. As shown in FIG. 2, the equipment control device 3 comprises a display device 20, an input device 30, a communication manager 40, a data manager 50, and a controller 60.

The display device 20 is a display device capable of displaying three-dimensional (stereoscopic) images by a known technique and constructed by, for example, a liquid crystal display. The display device 20 displays monitoring screens of operation states, operation screens, and the like of the equipped apparatuses 2 under the control of the controller 60.

The input device 30 is placed on the display screen of the display device 20. As a user or an operator enters an operation, the input device 30 outputs signals corresponding to the operation content (for example, monitoring screen switching, operation on the group of equipped apparatuses 5, and direction such as various kinds of setting) to the controller 60. More specifically, the input device 30 is constructed by a capacitance touch panel. The input device 30 further has a function of detecting a user's finger (an operation body) by means of sensors of the touch panel. The input device 30 further has a function of measuring the distance to the detected user's finger (the distance measuring function). For example, the technique disclosed in Unexamined Japanese Patent Application Kokai Publication No. 2008-153025 can be utilized as the distance measuring function.

The communication manager 40 is an interface of the dedicated communication line 4. Data are transmitted/received to/from the equipped apparatuses 2 via the communication manager 40.

The data manager 50 is constructed by a nonvolatile readable/writable semiconductor memory such as a flash memory, a hard disc drive, and the like. The data manager 50 manages various data necessary for the controller 60 to control the group of equipped apparatuses 5 and control the display of stereoscopic images. The data managed by the data manager 50 are largely divided into air-conditioning data 51, screen data 52, and stereoscopic image data 53.

The air-conditioning data 51 include connection information 71, operation state data 72, installation location data 73 and the like of the equipped apparatuses 2.

The connection information 71 includes an address number, an operation group number, apparatus model identification information and the like of each equipped apparatus 2 managed by the equipment control device 3. The connection information 71 is data necessary for controlling the equipped apparatuses 2.

The operation state data 72 include data presenting the current operation states of the equipped apparatuses 2 such as on, off, operation mode, namely cool and heat, and set temperature and the room temperature. The operation state data 72 are updated as needed through data transmission/reception to/from the equipped apparatuses 2.

The installation location data 73 include data presenting the installation locations of the equipped apparatuses 2 (a floor number, location coordinates, and the like). For example, the data present the location coordinates (in dot) on an indoor plan view of the living space provided that an image depicting the equipped apparatuses 2 is displayed over an image of the indoor plan view in a superimposed manner. Alternatively, the data may present the ratio in percent of the location to the vertical/horizontal sizes of the entire floor of the living space with reference to a position on the plan view (for example, the top left corner).

The screen data 52 include a constituent item management table 81. The constituent item management table 81 is a data table for managing operation items (icons) provided on each of the screens displayed on the display device 20. The constituent item management table 81 is managed separately on a per-screen basis.

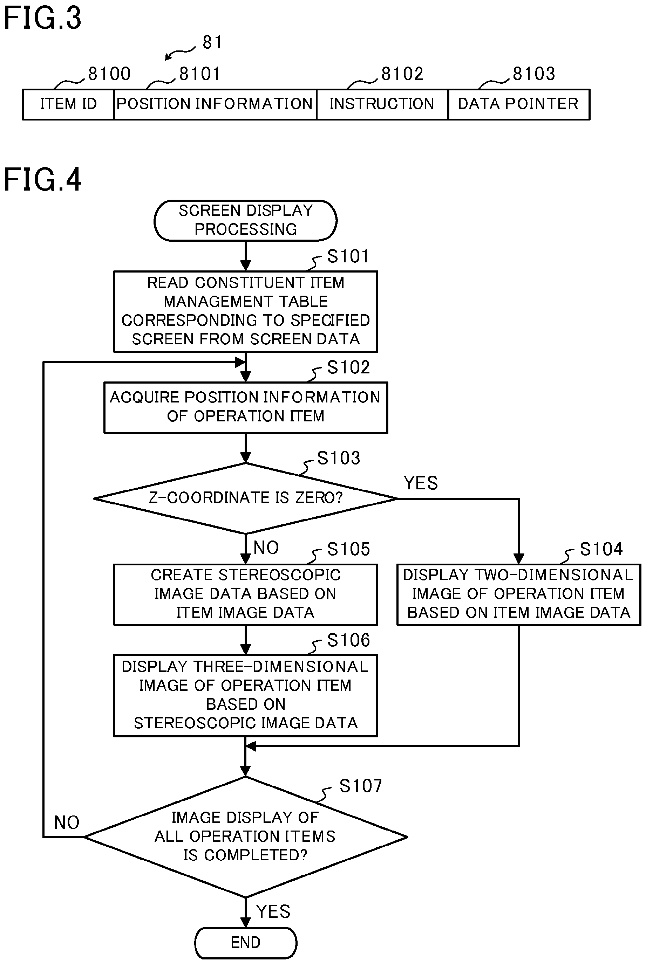

The constituent item management table 81 has record entries as many as the operation items, each record comprising, as shown in FIG. 3, an item ID 8100, position information 8101, an instruction 8102, and a data pointer 8103. The item ID 8100 isan ID assigned in advance for identifying the operation item (icon).

The position information 8101 is data presenting the display position of the operation item on the screen, and includes X-coordinate (horizontal) and Y-coordinate (vertical) position information used in two-dimensional display and additionally includes Z-coordinate (height) information used in three-dimensional display.

The instruction 8102 presents the command executed by the controller 60 when the user operates the operation item indicated by the item ID 8100.

The data pointer 8103 is information (a pointer) indicating where item image data 91 corresponding to the item ID 8100 are stored (a memory address). Here, in the case of three-dimensionally displaying the operation item corresponding to the item ID 8100, multiple sets of item image data 91 may correspond to a single item ID 8100, namely to a single operation item. In such a case, information indicating where the multiple sets of item image data 91 are stored is set in the data pointer 8103.

The stereoscopic image data 53 include item image data 91 corresponding to the operation items managed by the above-described constituent item management table 81. The item image data 91 are, for example, image data corresponding to a button on the operation screen or equipment image. The item image data 91 present an entire or partial operation item created in the bitmap, gif, or video format or the like.

The controller 60 comprises a CPU (Central Processing Unit), a ROM (Read Only Memory), a RAM (Random Access Memory) and the like although none of these are shown. The functions of the controller 60 as described later are realized by the CPU running the programs stored in the ROM and/or the like.

The controller 60 monitors and controls the equipped apparatuses 2 and displays the results and the like on the display device 20. The controller 60 includes an equipment controller 61, a stereoscopic image creator 62, an operation position detector 63, an operable range calculator 64, an operation detector 65, an operation executor 66 and the like.

The equipment controller 61 monitors and controls the equipped apparatuses 2 such as air-conditioning apparatuses. The equipment controller 61 stores the operation states acquired from the equipped apparatuses 2 in the air-conditioning data 51 of the data manager 50 as operation state data 72.

The stereoscopic image creator 62 creates image data for stereoscopically displaying the operation items using one or multiple sets of corresponding item image data 91 stored in the stereoscopic image data 53.

The operation position detector 63 acquires information regarding the position of the operator's finger (operation body) (operation position information) from the input device 30 and stores the acquired position information in the RAM or the like. The input device 30 detects the operator's finger tip position in the three, X-axis (horizontal), Y-axis (vertical), and Z-axis (height), directions and supplies the results (operation position information) to the operation position detector 63.

The operable range calculator 64 calculates the stereoscopic, operable ranges of the operation items based on the position information of the operation items (X-coordinate (horizontal), Y-coordinate (vertical), and Z-coordinate (height)). The operable range calculator 64 stores the calculated operable ranges of the operation items in the RAM or the like in association with their item IDs 8100.

The operation detector 65 determines whether the operator's finger tip is placed within the operable range of any of the displayed operation items based on the operation position information acquired by the operation position detector 63 and the above calculation results by the operable range calculator 64. If the operator's finger tip is placed within the operable range of any of the displayed operation items, the operation detector 65 notifies the operation executor 66 accordingly, along with the item ID 8100 of the operation item.

Receiving the notification from the operation detector 65, the operation executor 66 executes a given processing associated with the operation item (icon). More specifically, the operation executor 66 makes reference to the constituent item management table 81 and executes the command indicated by the instruction 8102 corresponding to the item ID 8100 notified from the operation detector 65.

Operation of the equipment control device 3 having the above configuration will be described hereafter. First, the processing to display a given screen on the display device 20 (the screen display processing) will be described. FIG. 4 is a flowchart showing the proceeding of the screen display processing. This processing starts when the operator conducts a given operation via the input device 30.

First, the controller 60 reads from the screen data 52 the constituent item management table 81 corresponding to the screen specified by the operator and stores the constituent item management table 81 in the RAM or the like (Step S101).

The controller 60 acquires from the read constituent item management table 81 the position information of one operation item, namely the X-coordinate (horizontal position), Y-coordinate (vertical position), and Z-coordinate (height position) (Step S102).

Subsequently, the controller 60 determines whether the Z-coordinate of the operation item is zero (Step S103). If the Z-coordinate is zero (Step S103; YES), there is no need for creating a stereoscopic image; then, the controller 60 retrieves the item image data 91 corresponding to the operation item from the stereoscopic image data 53 and displays an image based on the item image data 91 on the display device 20 (Step S 104). In such a case, the image of the operation item is two-dimensionally displayed.

On the other hand, if the Z-coordinate is not zero (Step S103; NO), it is necessary to create a stereoscopic image; then, the controller 60 requests the stereoscopic image creator 62 to create image data for stereoscopically displaying an image of the operation item. Receiving the request, the stereoscopic image creator 62 creates image data for stereoscopically displaying the operation item using one or multiple sets of item image data 91 corresponding to the operation item in the stereoscopic image data 53 (Step S 105). The controller 60 displays on the display device 20 an image based on the stereoscopic display image data created by the stereoscopic image creator 62 (Step S106). Consequently, the image of the operation item is three-dimensionally displayed. In other words, the operation item is visible as if it was projected from the screen to the height corresponding to the value of the Z-coordinate.

The controller 60 determines whether all operation items belonging to the screen specified by the operator have their images displayed (Step S 107). If not all operation items have their images displayed (Step S107; NO), the controller 60 returns to the Step S102 and executes the above-described processing again. On the other hand, if all operation items have their images displayed (Step S107; YES), the controller 60 ends the screen display processing.

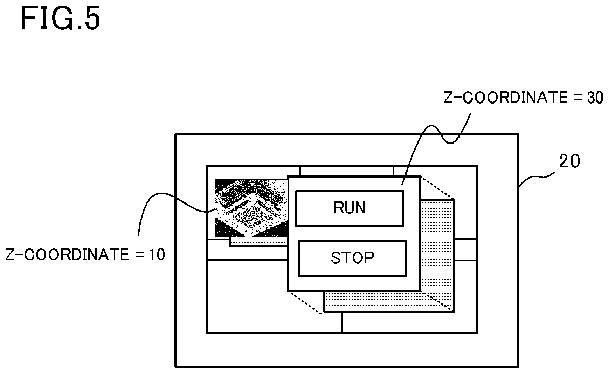

FIG. 5 shows an exemplary screen displayed on the display device 20 in the above-described screen display processing. This screen stereoscopically displays an icon presenting an air-conditioning apparatus at a height position of 10 and an operation screen at a height position of 30.

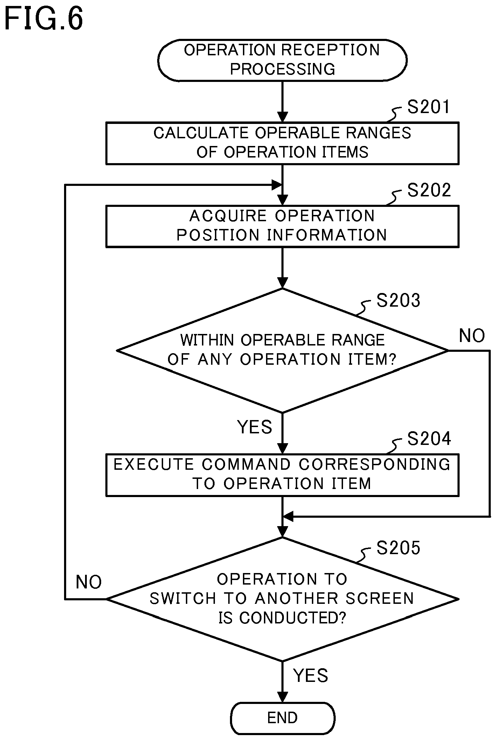

The processing executed when the operator operates the operation items displayed as described above (the operation reception processing) will be described hereafter. FIG. 6 is a flowchart showing the proceeding of the operation reception processing. This processing starts after the screen display processing ends.

First, the operable range calculator 64 calculates the operable ranges of the operation items based on the position information of the operation items constituting the screen (Step S201).

The operation position detector 63 acquires information regarding the current position of the operator's finger tip (operation position information) from the input device 30 (Step S202).

The operation detector 65 determines whether the operator's finger tip is placed within the operable range of any of the displayed operation items based on the operation position information acquired by the operation position detector 63 and the operable ranges of the operation items calculated by the operable range calculator 64 (Step S203). If the operator's finger tip is placed within the operable range of any of the displayed operation items (Step S203; YES), the operation detector 65 notifies the operation executor 66 accordingly, along with the item ID 8100 of the operation item. In such a case, it is assumed that the operator has conducted a touch operation on the operation item.

Receiving the notification, the operation executor 66 makes reference to the constituent item management table 81 and executes the command indicated by the instruction 8102 corresponding to the item ID 8100 notified from the operation detector 65 (Step S204).

The controller 60 determines whether the operator has conducted an operation to switch to another screen (Step S205). If no operation to switch to another screen is conducted (Step S205; NO), the controller 60 returns to the Step S202 and executes the above-described processing again. On the other hand, if an operation to switch to another screen is conducted (Step S205; YES), the controller 60 ends the operation reception processing.

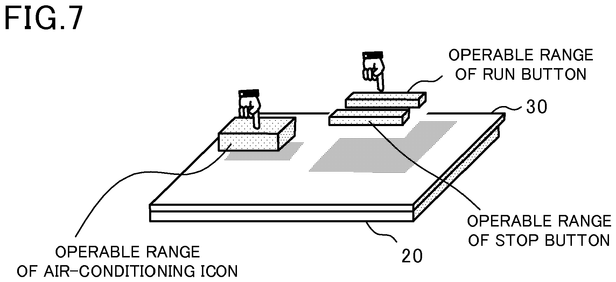

FIG. 7 shows the stereoscopic, operable ranges of some operation items when the display device 20 is seen from a perspective view. This example shows the operable ranges of an air-conditioning icon (an icon presenting an air-conditioning apparatus) and its run and stop buttons in the form of cubes enclosed by the X-coordinate, Y-coordinate, and Z-coordinate. Then, when the operator's finger tip is placed within any of the operable ranges, a given processing associated with the operation item is executed.

In this embodiment, the input device 30 is a capacitance touch panel capable of measuring the distance to the operation body. However, the input device 30 is not particularly restricted to a capacitance touch panel and, furthermore, may be realized using some other distance measuring method.

Furthermore, this embodiment is described using still images by way of example. Usable images are not restricted to still images and, for example, video images may be used.

As described above in detail, the equipment control device 3 according to Embodiment 1 manages the Z-coordinate (height) in addition to the X-coordinate (horizontal) and Y-coordinate (vertical) used in two-dimensional display as the position information of operation items. Then, the equipment control device 3 comprises the function of calculating the spatial ranges in which the operation items are operable based on the position information.

Consequently, the operator can operate a stereoscopically displayed image of an operation item at the position where the image is actually visible (in midair) and thus conduct intuitive operation.

As described above, midair operation is available and there is no need for the finger to contact the touch panel at each operation. Then, the touch panel surface does not get greasy, etc. and is expected to have a longer life.

Furthermore, since the input device 30 of a touch panel type is provided on the display screen of the display device 20, the distance between the operator's finger tip and the display device 20 is nearly equal to the distance between the operator's finger tip and the input device 30. Then, the error upon operation can be diminished as much as possible.

Furthermore, properly setting the Z-axis (height) information of the operation items, enables images of multiple operation items to be displayed in a superimposed manner, and the two-dimensional tab display to be presented in the vertical direction. This enables even a small-sized screen to display more information.

### Embodiment 2

Embodiment 2 of the present invention will be described hereafter.

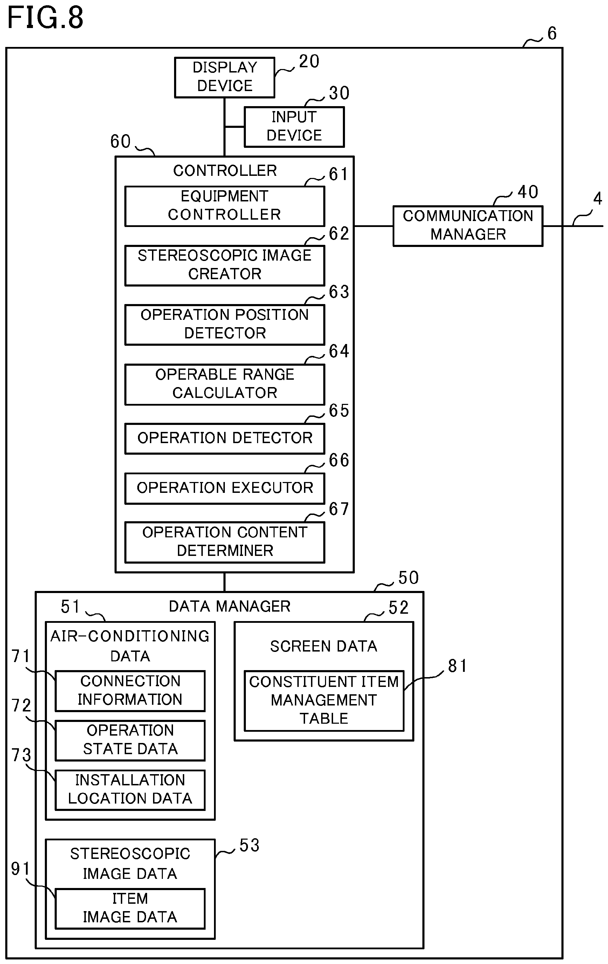

FIG. 8 shows a configuration of an equipment control device 6 according to Embodiment 2 of the present invention. As shown in FIG. 8, the equipment control device 6 is different from Embodiment 1 in that the controller 60 additionally comprises an operation content determiner 67.

The operation content determiner 67 determines what operation the operator has conducted on an operation item. More specifically, if the operator's finger (operation body) is placed within the operable range of any of the displayed operation items, the operation content determiner 67 determines which is conducted, touch operation or pinching operation, based on the number of operation bodies detected by the input device 30 simultaneously.

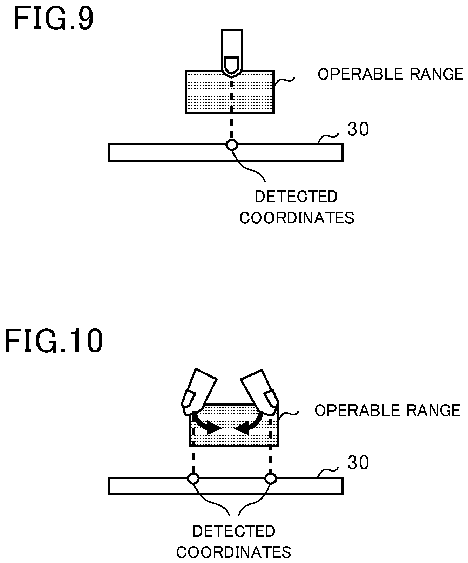

FIG. 9 shows the motion of a finger of the operator upon touch operation on a stereoscopically displayed operation item such as pressing a button. As shown in the figure, it is natural for the operator to use one finger for touch operation. Therefore, the input device 30 detects one finger (operation body) coordinate position. In other words, in such a case, one operation body (one finger) is detected.

On the other hand, FIG. 10 shows the motion of fingers of the operator for pinching a stereoscopically displayed operation item. As shown in the figure, the operator usually uses two fingers to pinch an operation item. In such a case, the input device 30 detects two operation bodies (two fingers) as the operator starts pinching an operation item. Then, after the operator has pinched the operation item, the two fingers contact each other and the input device 30 detects one operation body (one finger).

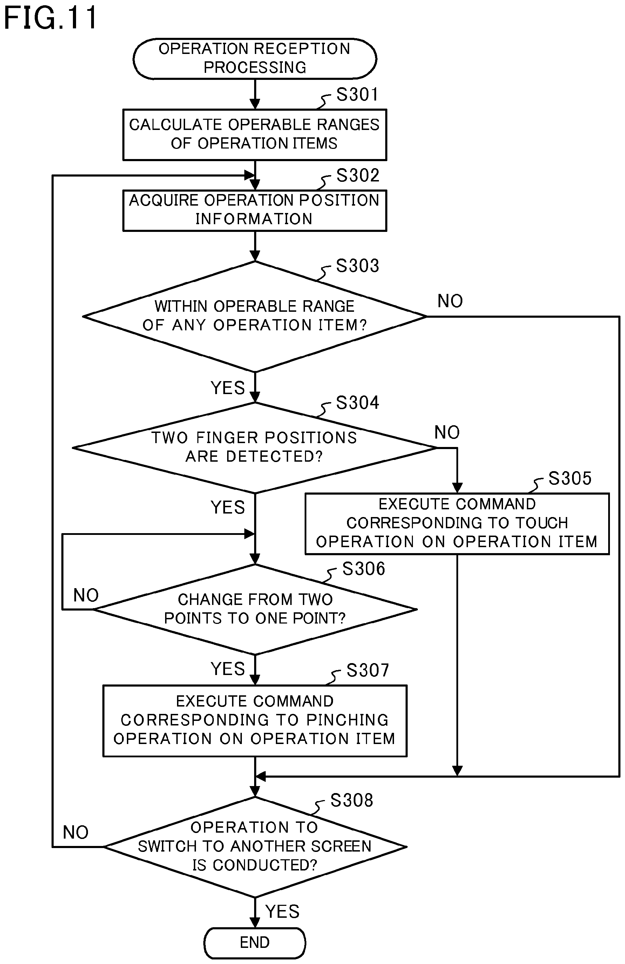

The operation reception processing in this embodiment will be described hereafter with reference to the flowchart of FIG. 11.

First, the operable range calculator 64 calculates the operable ranges of the operation items based on the position information of the operation items constituting the screen (Step S301).

The operation position detector 63 acquires information regarding the current position of the operator's finger (operation position information) from the input device 30 (Step S302).

The operation detector 65 determines whether the operator's finger tip is placed within the operable range of any of the displayed operation items based on the operation position information acquired by the operation position detector 63 and the operable ranges of the operation items calculated by the operable range calculator 64 (Step S303). If the operator's finger tip is placed within the operable range of any of the displayed operation items (Step S303; YES), the operation detector 65 notifies the operation content determiner 67 accordingly, along with the item ID 8100 of the operation item and the operation position information.

The operation content determiner 67 determines whether there are two operator's finger tip points detected (detected coordinate positions) based on the operation position information (Step S304). If there are not two points detected, namely there is one point detected (Step S304; NO), the operation content determiner 67 notifies the operation executor 66 accordingly, along with the item ID 8100 of the operation item. In such a case, it is assumed that the operator has conducted a touch operation on the operation item.

Receiving the notification, the operation executor 66 makes reference to the constituent item management table 81 and executes the command corresponding to the touch operation among multiple commands indicated by the instruction 8102 corresponding to the item ID 8100 notified from the operation detector 65 (Step S305). In this embodiment, the command for touch operation and the command for pinching operation are separately set in the instruction 8102 of the constituent item management table 81.

On the other hand, if there are two operator's finger tip points detected (Step S304; YES), the operation content determiner 67 monitors the change of the detected points. Then, as the two detected points become one (Step S306; YES), the operation content determiner 67 notifies the operation executor 66 accordingly, along with the item ID 8100 of the operation item. In such a case, it is assumed that the operator has conducted a pinching operation on the operation item.

Receiving the notification, the operation executor 66 makes reference to the constituent item management table 81 and executes the command corresponding to the pinching operation among multiple commands indicated by the instruction 8102 corresponding to the item ID 8100 notified from the operation detector 65 (Step S307).

The controller 60 determines whether the operator has conducted an operation to switch to another screen (Step S308). If no operation to switch to another screen is conducted (Step S308; NO), the controller 60 returns to the Step S302 and executes the above-described processing again. On the other hand, if an operation to switch to another screen is conducted (Step S308; YES), the controller 60 ends the operation reception processing.

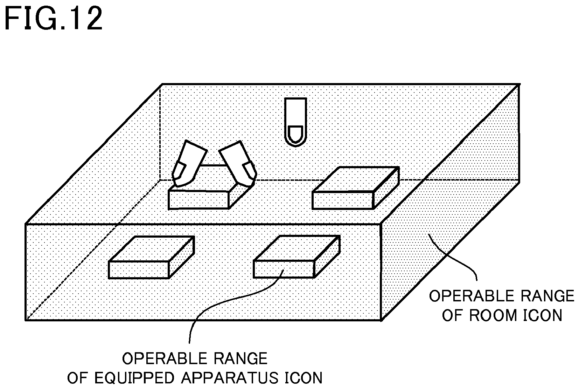

FIG. 12 shows an example of displaying multiple operation items in a superimposed manner, depicting how multiple operation items (equipped apparatus icons) presenting equipped apparatuses (for example, air-conditioning apparatuses) are provided within an operation item presenting a room (a room icon).

For example, if the operator wants to collectively control the air-conditioning of the entire room while the above screen is displayed, the operator can switch the current screen to a collective operation screen by touch operation with one finger. On the other hand, if the operator wants to operate one of the air-conditioning apparatuses, the operator can switch the current screen to an operation screen for the air-conditioning apparatus by pinching operation on the operation item presenting the air-conditioning apparatus.

In this embodiment, the operator's operation content, namely the finger operation type is either one of the two types, touch operation and pinching operation. However, the operation content (operation type) is not restricted thereto. For example, if the operator flicks an operation item with a finger, the equipment control device 6 may scroll the screen or switch the display screen. Alternatively, if the operator rotates an operation item such as a dial with two fingers, the equipment control device 6 may rotate the operation item and executes the processing corresponding to the degree of rotation. As just mentioned, various midair finger motions of the operator enable for the finger operation types to be assigned.

Furthermore, it is possible that as the operator pinches and moves an operation item, the pinched operation item is displayed at a different position accordingly. In this way, the task of providing the operation items (icons) presenting the equipped apparatuses 2 on a plan view during initial setting and the like become easier.

As described above, the equipment control device 6 according to Embodiment 2 determines which operation is conducted, touch operation or pinching operation, based on the number of operator's fingers (operation bodies) and executes different operation according to the determination result. Consequently, even a small-screen equipment control device can realize diverse operations.

Furthermore, the equipment control device 6 according to Embodiment 2 allows the operator to operate any operation item, outer or inner, on a screen on which multiple operation items are displayed within a stereoscopically displayed operation item by using touch operation or pinching operation properly. Then, for example, there is no need for providing buttons for selecting an operation target such as a "collective operation" button and "individual operation" button. Then, the same operation performance can be realized with a smaller display area.

### Embodiment 3

Embodiment 3 of the present invention will be described hereafter.

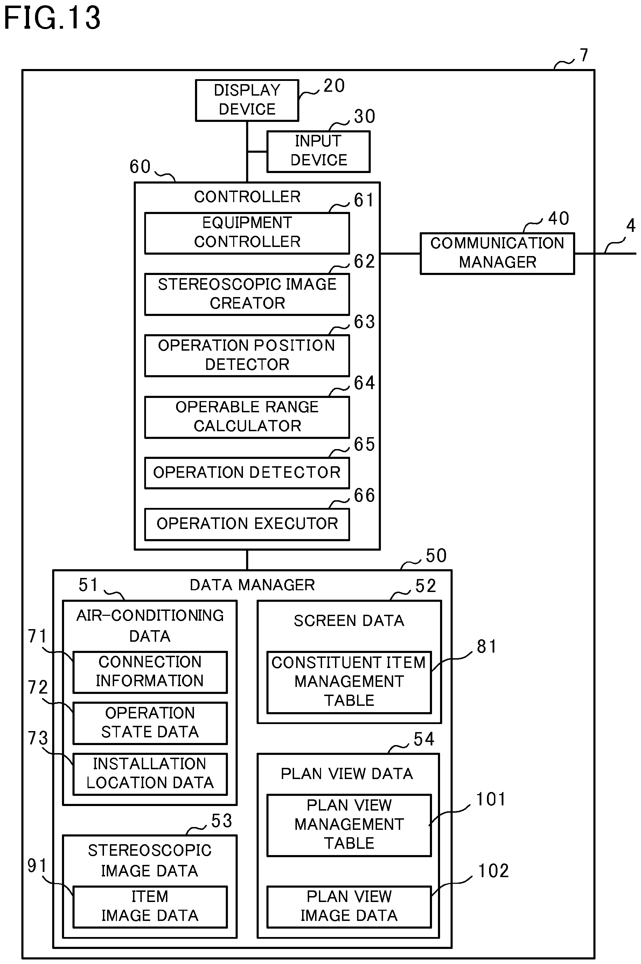

FIG. 13 shows a configuration of an equipment control device 7 according to Embodiment 3 of the present invention. As shown in FIG. 13, the equipment control device 7 is different from Embodiment 1 in that the data managed by the data manager 50 additionally include plan view data 54.

The plan view data 54 include a plan view management table 101, plan view image data 102 and the like. The plan view management table 101 is a data table for managing the plan views displayed on the display device 20.

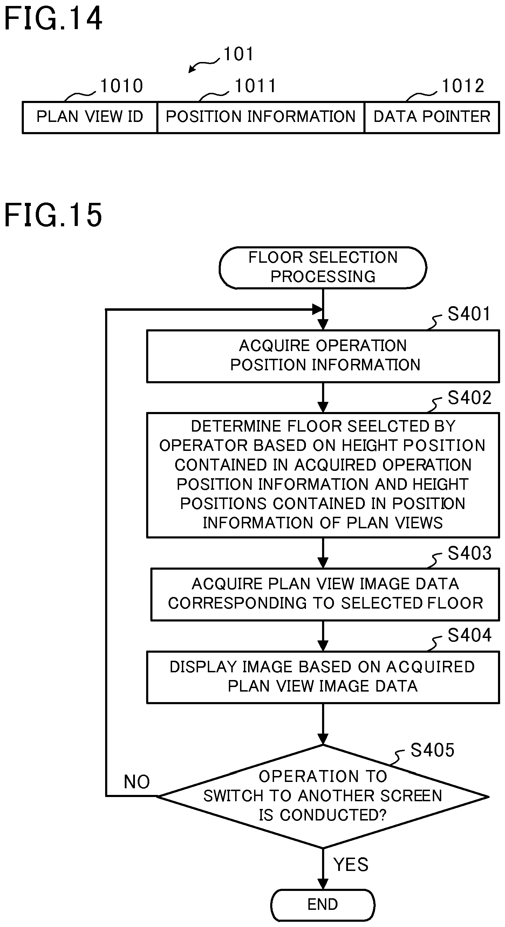

The plan view management table 101 has record entries as many as the number of plan views, each record comprising, as shown in FIG. 14, a plan view ID 1010, position information 1011, and a data pointer 1012. The plan view ID 1010 is an ID assigned in advance for identifying each plan view.

The position information 1011 is data presenting the display position of the plan view on the screen, and includes X-coordinate (horizontal) and Y-coordinate (vertical) position information used in two-dimensional display and additionally includes Z-coordinate (height) information used in three-dimensional display.

The data pointer 1012 is information (a pointer) indicating where the plan view image data 102 corresponding to the plan view ID 1010 are stored (a memory address). The plan view image data 102 are image data corresponding to the plan view of each floor of a building. The plan view image data 102 present each plan view image created in the bitmap, gif, or video format or the like.

In this embodiment, the plan views of the floors (floor images) are displayed in an hierarchical fashion. Therefore, the value of the Z-coordinate of the position information of a plan view is increased in sequence in accordance with the corresponding floor.

The processing to change the displayed floor in accordance with the finger motion of the operator (the floor selection processing) executed by the equipment control device 7 will be described hereafter.

FIG. 15 is a flowchart showing the proceeding of the floor selection processing. This processing starts as the operator specifies a screen to display a plan view of a floor (a floor plan view display screen).

First, the operation position detector 63 of the controller 60 acquires information regarding the current position of the operator's finger (operation position information) from the input device 30 (Step S401).

The operation executor 66 determines the floor selected by the operator based on the Z-coordinate value (namely, the height position) contained in the operation position information acquired by the operation position detector 63 and the Z-coordinate values (namely, the height positions) contained in the position information of the plan views (Step S402). For example, it is assumed that the Z-coordinate value of the plan view corresponding to a floor A is ZA (dots) and the Z-coordinate value of the plan view corresponding to a floor B that is one floor up from the floor A is ZB (dots). In such a case, if the operation body (the operator's finger) is at a position equal to or higher than ZA and lower than ZB, the operation executor 66 determines that the floor A is selected by the operator. Furthermore, the operation executor 66 determines that the highest floor is selected by the operator if the height position of the operation body is equal to or higher than the Z-coordinate value (ZT) of the plan view corresponding to the highest floor and lower than ZT plus a given height.

The operation executor 66 acquires the plan view image data 102 corresponding to the selected floor from the plan view data 54 (Step S403). Then, the operation executor 66 displays an image based on the acquired plan view image data 102 on the display device 20 (Step S404). In doing so, the operation executor 66 displays the operation states and the like of the equipped apparatuses 2 installed on the floor in alignment with the height position of the plan view on the display device 20. Consequently, the operation states of the equipped apparatuses 2 are displayed on the plan view of the floor selected by the operator.

Here, if the operator further moves the finger to select another floor, the displayed floor plan view is hidden. Furthermore, if the operator's finger moves away and no floor is selected, all floor plan views are hidden.

The controller 60 determines whether the operator has conducted an operation to switch to another screen (Step S405). If no operation to switch to another screen is conducted (Step S405; NO), the controller 60 returns to the Step S401 and executes the above-described processing again. On the other hand, if an operation to switch to another screen is conducted (Step S405; YES), the controller 60 ends the floor selection processing.

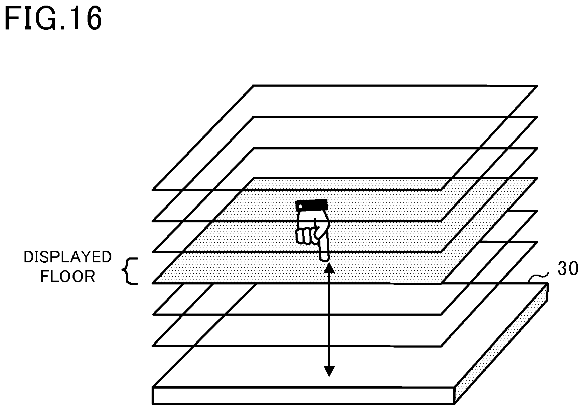

Here, as shown in FIG. 16, for example, only the floor frames may be displayed for the floors that are not the target of display, so that the operator can immediately acknowledge the relationship between the finger position and floor number.

Furthermore, if the operator has withdrawn his/her finger and no floor is selected, the plan view of the floor selected last may be kept displayed for a given time period.

Furthermore, the image presenting a floor is not restricted to a plan view image and may be a stereoscopic image stereoscopically displaying the walls and partitions.

As described above, the equipment control device 7 according to Embodiment 3 allows the operator to easily switch the monitoring screen of each floor of a building by moving his/her finger toward or away from the input device 30 (namely, the touch panel). This enables the states of the equipped apparatuses 2 on the floors to be monitored with a simple and intuitive operation.

Furthermore, since moving a finger toward or away from the touch panel enables the floor display to be switched, there is no need for providing any floor selection buttons or the like on the screen. This even enables the screen display area of an equipment control device with a small-screen display device to be used efficiently.

The applying of programs executed by the equipment control devices 3, 6, and 7 in Embodiments 1 to 3, respectively, to existing personal computers (PC) and the like, enables the PCs to function as the equipment control device according to the present invention. In other words, it is possible to apply the programs executed by the above-described controller 60 to an existing PC or the like and allow the CPU or the like of the PC or the like to execute the programs so as to make the PC or the like function as the equipment control device according to the present invention.

Such programs may be distributed by any method and, for example, stored and distributed on a computer-readable recording medium such as a flexible disk, a CD-ROM (Compact Disk Read-Only Memory), a DVD (Digital Versatile Disk), a MO (Magneto Optical disk), and a memory card. Alternatively, it is possible to store the programs on a disk drive of a server unit on a communication network such as the Internet and superimpose on carrier waves and distribute the programs from the server unit via the communication network.

In the above case, when the above-described functions according to the present invention are realized by apportionment between an OS (Operating System) and application programs or cooperation of an OS and application programs, only the application programs may be stored on a recording medium or the like.

### Industrial Applicability

The present invention is suitably applied to equipment systems installed in office buildings and the like.

### Reference Signs List

- 1: Equipment system
- 2: Equipped apparatus
- 3, 6, 7: Equipment control device
- 4: Dedicated communication line
- 5: Group of equipped apparatuses
- 20: Display device
- 30: Input device
- 40: Communication manager
- 50: Data manager
- 51: Air-conditioning data
- 52: Screen data
- 53: Stereoscopic image data
- 54: Plan view data
- 60: Controller
- 61: Equipment controller
- 62: Stereoscopic image creator
- 63: Operation position detector
- 64: Operable range calculator
- 65: Operation detector
- 66: Operation executor
- 67: Operation content determiner
- 71: Connection information
- 72: Operation state data
- 73: Installation location data
- 81: Constituent item management table
- 91: Item image data
- 101: Plan view management table
- 102: Plan view image data

## Claims

1. An equipment control device (3) including a communicator (40) for communicating with multiple equipped apparatuses (2), the equipment control device for managing operation states of the multiple equipped apparatuses (2), comprising:
a display (20) configured to stereoscopically display icons;
an operation inputter (30) provided on a display screen of the display (20), and configured to receive an operation input by a user using an operation body, and to detect a position of the operation body;
a data manager (50) configured to manage data in which each of the icons is associated with image data, position information for stereoscopic display, and a command to be executed when operated,
an operable range calculator (64) configured to calculate a stereoscopically operable range of an icon based on the position information of the icon;
an operation position detector (63) configured to acquire a position of the operation body from the operation inputter (30); and
an operation executor (66) configured to execute the command associated with the icon when the operation body enters the operable range;
wherein the display (20) further stereoscopically displays a floor image corresponding to each floor of a building where the equipment control device (3) and the multiple equipped apparatuses (2) are installed;
wherein the data manager (50) further manages data in which each floor image is associated with image data and position information for stereoscopic display;
and wherein the operation executor (66) further determines a floor selected by the user based on a height position of the operation body and a height position of each floor image, stereoscopically displays only the floor image corresponding to the determined floor on the display (20).

2. The equipment control device (3) according to Claim 1, **characterized in that** the operation inputter (30) comprises a capacitance touch panel.

3. An operation reception method carried out by an equipment control device (3) that includes a communicator (40) for communicating with multiple equipped apparatuses (2) and that manages operation states of the multiple equipped apparatuses (2), comprising:
a display step of stereoscopically displaying icons on a display (20);
an operation input step of, by an operation inputter (30) provided on a display screen of the display (20), receiving an operation input by a user using an operation body and detecting a position of the operation body;
a data management step of managing, by a data manager (50), data in which each of the icons is associated with image data, position information for stereoscopic display, and a command to be executed when operated,
an operable range calculation step of calculating, by an operable range calculator (64), a stereoscopically operable range of an icon based on the position information of the icon;
a position acquisition step of acquiring, by an operation position detector (63), a position of the operation body from the operation inputter (30); and
an operation execution step of, by an operation executor (66),
executing the command associated with the icon when the operation body enters the operable range;
wherein the display (20) further stereoscopically displays a floor image corresponding to each floor of a building where the equipment control device (3) and the multiple equipped apparatuses (2) are installed;
wherein the data manager (50) further manages data in which each floor image is associated with image data and position information for stereoscopic display;
and wherein the operation executor (66) further determines a floor selected by the user based on a height position of the operation body and a height position of each floor image, stereoscopically displays only the floor image corresponding to the determined floor on the display (20).

4. A computer program comprising instructions which, when the program is executed by a computer that includes a communicator (40) for communication with multiple equipped apparatuses (2) and that manages operation states of the multiple equipped apparatuses (2), cause the computer to carry out the method of Claim 3.

## Patentansprüche

1. Anlagensteuerungseinrichtung (3), beinhaltend eine Kommunikationsvorrichtung (40) zum Kommunizieren mit einer Vielzahl ausgestatteter Anlagen (2), wobei die Anlagensteuerungseinrichtung zum Verwalten von Betriebszuständen der Vielzahl ausgestatteter Anlagen (2) umfasst:
eine Anzeige (20), die ausgebildet ist, um Symbole stereoskopisch anzuzeigen;
einen Bedienungseingeber (30), der auf einem Anzeigebildschirm der Anzeige (20) bereitgestellt und ausgebildet ist, um eine Bedieneingabe durch einen Nutzer, der einen Bedienkörper verwendet, zu empfangen und eine Position des Bedienkörpers zu erfassen;
einen Datenverwalter (50), der ausgebildet ist zum Verwalten von Daten, in denen jedes der Symbole assoziiert ist mit Bilddaten, Positionsinformation für stereoskopische Anzeige und einem Befehl, der nach Bedienung ausgeführt werden soll,
einen Bedienbereich-Berechner (64), der ausgebildet ist zum Berechnen eines stereoskopischen Bedienbereichs eines Symbols auf Grundlage der Positionsinformation des Symbols;
einen Bedienungspositionserfasser (63), der ausgebildet ist zum Erwerben einer Position des Bedienkörpers vom Bedienungseingeber (30); und
einen Bedienungsausführer (66), der ausgebildet ist zum Ausführen des mit dem Symbol assoziierten Befehls, wenn der Bedienkörper in den Bedienbereich eintritt;
wobei die Anzeige (20) ferner ein Stockwerkbild stereoskopisch anzeigt, entsprechend jedes Stockwerks eines Gebäudes, in dem die Anlagensteuerungseinrichtung (3) und die Vielzahl ausgestatteter Anlagen (2) installiert sind;
wobei der Datenverwalter (50) ferner Daten verwaltet, bei denen jedes Stockwerkbild assoziiert ist mit Bilddaten und Positionsinformation zum stereoskopischen Anzeigen;
und wobei der Bedienungsausführer (66) ferner ein durch den Nutzer ausgewähltes Stockwerk auf Grundlage einer Höhenposition des Bedienkörpers und einer Höhenposition jedes Stockwerkbildes ermittelt, und nur das Stockwerkbild entsprechend des ermittelten Stockwerks auf der Anzeige (20) stereoskopisch anzeigt.

2. Anlagensteuerungseinrichtung (3) nach Anspruch 1, **dadurch gekennzeichnet, dass** der Bedienungseingeber (30) ein kapazitives Berührungsfeld umfasst.

3. Bedienungsempfangsverfahren, ausgeführt durch eine Anlagensteuerungseinrichtung (3), die eine Kommunikationsvorrichtung (40) zum Kommunizieren mit einer Vielzahl ausgestatteter Anlagen (2) beinhaltet und die Betriebszustände der Vielzahl ausgestatteter Anlagen (2) verwaltet, umfassend:
einen Anzeigeschritt des stereoskopischen Anzeigens von Symbolen auf einer Anzeige (20);
einen Bedienungseingabeschritt des Empfangens, durch einen auf einem Anzeigebildschirm der Anzeige (20) bereitgestellten Bedienungseingeber (30), einer Bedieneingabe durch einen Nutzer, der einen Bedienkörper verwendet, und des Erfassens einer Position des Bedienkörpers;
einen Datenverwaltungsschritt des Verwaltens, durch den Datenverwalter (50), von Daten, in denen jedes der Symbole mit Bilddaten, Positionsinformation für stereoskopisches Anzeigen und einem Befehl, der nach Bedienung ausgeführt werden soll, assoziiert ist.
einen Bedienbereich-Berechnungsschritt des Berechnens, durch einen Bedienbereich-Berechner (64), eines stereoskopischen Bedienbereichs eines Symbols auf Grundlage der Positionsinformation des Symbols;
einen Positionserfassungsschritt des Erfassens, durch einen Bedienungspositionserfasser (63), einer Position des Bedienkörpers vom Bedienungseingeber (30); und
einen Bedienungsausführungsschritt des Ausführens, durch einen Bedienungsausführer (66), des mit dem Symbol assoziierten Befehls, wenn der Bedienkörper in den Bedienbereich eintritt;
wobei die Anzeige (20) ferner ein Stockwerkbild entsprechend jedem Stockwerk eines Gebäudes stereoskopisch anzeigt, indem die Anlagensteuerungseinrichtung (3) und die Vielzahl ausgestatteter Anlagen (2) installiert sind;
wobei der Datenverwalter (50) ferner Daten verwaltet, in denen jedes Stockwerkbild assoziiert ist mit Bilddaten und Positionsinformation für stereoskopisches Anzeigen;
und wobei der Bedienungsausführer (66) ferner ein durch den Nutzer ausgewähltes Stockwerk auf Grundlage einer Höhenposition des Bedienkörpers und einer Höhenposition jedes Stockwerkbildes ermittelt, und nur das Stockwerkbild entsprechend des ermittelten Stockwerks auf der Anzeige (20) stereoskopisch anzeigt.

4. Computerprogramm, Anweisungen umfassend, die, wenn das Programm von einem Computer ausgeführt wird, der eine Kommunikationsvorrichtung (40) für die Kommunikation mit einer Vielzahl ausgestatteter Anlagen (2) beinhaltet und der Betriebszustände der Vielzahl ausgestatteter Anlagen (2) verwaltet, den Computer veranlassen, das Verfahren nach Anspruch 3 auszuführen.

## Revendications

1. Dispositif de commande d'équipement (3) comprenant un module de communication (40) destiné à communiquer avec de multiples appareils équipés (2), le dispositif de commande d'équipement étant destiné à gérer des états opérationnels des multiples appareils équipés (2), comprenant :
un afficheur (20) configuré de manière à afficher de façon stéréoscopique des icônes ;
un module d'entrée d'opérations (30) fourni sur un écran d'affichage de l'afficheur (20), et configuré de manière à recevoir une entrée d'opération par le biais d'un utilisateur utilisant un corps d'opération, et à détecter une position du corps d'opération ;
un gestionnaire de données (50) configuré de manière à gérer des données dans lesquelles chacune des icônes est associée à des données d'image, des informations de position pour un affichage stéréoscopique, et une instruction à exécuter lorsqu'elle est exploitée ;
un calculateur de plage exploitable (64) configuré de manière à calculer une plage exploitable de façon stéréoscopique d'une icône sur la base des informations de position de l'icône ;
un détecteur de position d'opération (63) configuré de manière à acquérir une position du corps d'opération à partir du module d'entrée d'opérations (30) ; et
un module d'exécution d'opération (66) configuré de manière à exécuter l'instruction associée à l'icône lorsque le corps d'opération entre dans la plage exploitable ;
dans lequel l'afficheur (20) affiche en outre de façon stéréoscopique une image d'étage correspondant à chaque étage d'un bâtiment où le dispositif de commande d'équipement (3) et les multiples appareils équipés (2) sont installés ;
dans lequel le gestionnaire de données (50) gère en outre des données dans lesquelles chaque image d'étage est associée à des données d'image et à des informations de position pour un affichage stéréoscopique ; et
dans lequel le module d'exécution d'opération (66) détermine en outre un étage sélectionné par l'utilisateur sur la base d'une position de hauteur du corps d'opération et d'une position de hauteur de chaque image d'étage, et affiche de façon stéréoscopique uniquement l'image d'étage correspondant à l'étage déterminé sur l'afficheur (20).

2. Dispositif de commande d'équipement (3) selon la revendication 1, **caractérisé en ce que** le module d'entrée d'opérations (30) comprend un écran tactile capacitif.

3. Procédé de réception d'opérations mis en oeuvre par un dispositif de commande d'équipement (3) qui inclut un module de communication (40) destiné à communiquer avec de multiples appareils équipés (2), et qui gère des états opérationnels des multiples appareils équipés (2), comprenant :
une étape d'affichage consistant à afficher de façon stéréoscopique des icônes sur un afficheur (20) ;
une étape d'entrée d'opérations consistant à, par le biais d'un module d'entrée d'opérations (30) fourni sur un écran d'affichage de l'afficheur (20), recevoir une entrée d'opération par le biais d'un utilisateur utilisant un corps d'opération, et détecter une position du corps d'opération ;
une étape de gestion de données consistant à gérer, par le biais d'un gestionnaire de données (50), des données dans lesquelles chacune des icônes est associée à des données d'image, des informations de position pour un affichage stéréoscopique, et une instruction à exécuter lorsqu'elle est exploitée ;
une étape de calcul de plage exploitable consistant à calculer, par le biais d'un calculateur de plage exploitable (64), une plage exploitable de façon stéréoscopique d'une icône sur la base des informations de position de l'icône ;
une étape d'acquisition de position consistant à acquérir, par le biais d'un détecteur de position d'opération (63), une position du corps d'opération à partir du module d'entrée d'opérations (30) ; et
une étape d'exécution d'opération consistant à exécuter, par le biais d'un module d'exécution d'opération (66), l'instruction associée à l'icône, lorsque le corps d'opération entre dans la plage exploitable ;
dans lequel l'afficheur (20) affiche en outre de façon stéréoscopique une image d'étage correspondant à chaque étage d'un bâtiment où le dispositif de commande d'équipement (3) et les multiples appareils équipés (2) sont installés ;
dans lequel le gestionnaire de données (50) gère en outre des données dans lesquelles chaque image d'étage est associée à des données d'image et à des informations de position pour un affichage stéréoscopique ; et
dans lequel le module d'exécution d'opération (66) détermine en outre un étage sélectionné par l'utilisateur sur la base d'une position de hauteur du corps d'opération et d'une position de hauteur de chaque image d'étage, et affiche de façon stéréoscopique uniquement l'image d'étage correspondant à l'étage déterminé sur l'afficheur (20).

4. Programme informatique comprenant des instructions qui, lorsque le programme est exécuté par un ordinateur qui inclut un module de communication (40) pour une communication avec de multiples appareils équipés (2), et qui gère des états opérationnels des multiples appareils équipés (2), amènent l'ordinateur à mettre en oeuvre le procédé selon la revendication 3.
